# EUROPEAN PATENT APPLICATION

(11) **EP 0 942 308 A2**
(43) Date of publication of application: **15.09.1999**
(21) Application number: 99301701.1
(22) Date of filing: 08.03.1999
(51) Int. Cl.: G02B 27/34

(54) **Graticule apparatus**

(30) Priority: 13.03.1998 GB 9805470
(71) Applicant: Marconi Electronic Systems Limited, Stanmore, Middlesex HA7 4LY (GB)
(72) Inventor: Freeman, Jonathan Paul, Rochester, Kent ME1 2UJ (GB)
(74) Representative: Cockayne, Gillian

(57) **Abstract**

The graticule apparatus 1 includes a graticule 4, a source of light, such as an LED 5, arranged to illuminate the graticule and an optical system arranged to produce an image of the graticule. The optical system may include a prism 6 having reflective surfaces 8, 9, and a lens 3. The apparatus is particularly suitable for use with a sight having moveable lenses, as the graticule does not undergo lateral movement when a lens is moved, which was a problem hitherto with e.g. graticules in zoom lenses. The apparatus is also suitable for use in low light conditions in conjunction with, for example, an image intensifier.

## Description

This invention relates to graticule apparatus.

A graticule is conventionally used in optical instruments, weapons sights etc. and comprises reference symbols marked on a glass plate or lens. The graticule is mounted in the instrument or sight to assist a user in determining the size and distance of objects viewed coincidentally with the graticule so that, for example, a weapon may accurately be aimed at a target.

A problem may be encountered when using such graticules in moveable lenses, such as zoom lenses. Such lenses tend to undergo a certain amount of lateral movement during focussing or zoom, which may cause the graticule to become off-centred and therefore provide an inaccurate reference for the user.

The invention provides graticule apparatus including a graticule, characterised by a source of light arranged to illuminate the graticule and an optical system arranged to produce an image of the graticule.

The image of the graticule is useable as a reference, and so the graticule itself may be mounted remotely from lenses in the sight so that the graticule remains stationary when the lenses are moved.

Furthermore, the provision of a light source for illuminating the graticule permits the graticule apparatus to be used in low light conditions.

Preferably, the source of light is a light emitting diode (LED). LED's may be energised at low power and so such illumination does not significantly drain battery capacity.

Advantageously, graticule positioning means is provided to enable the graticule to be adjusted in directions parallel to the plane of the graticule, so that the graticule may be aligned before use.

The optical system preferably includes a prism having at least one reflective surface. Such a prism permits the image of the graticule to be projected into a sight.

Attachment means may be provided to enable the graticule apparatus to be secured to a sight. The optical system may further include a lens for producing an image of the graticule in the sight.

A light sensitive device such as an image intensifier or a camera, may be positioned in the focal plane of the lens.

The graticule apparatus advantageously is employed as an accessary for a sight, but may be an integral component of a sight or other imaging apparatus, such as an image intensifier.

The invention will now be described, by way of example, with reference to, or as illustrated in, the accompanying drawings, in which:-
Figure 1 is a schematic side view of the graticule apparatus;
Figure 2 is a schematic side view of the graticule apparatus of Figure 1, when attached to a sight;
Figure 3 is a partly sectional side view of the graticule apparatus of Figure 1;
Figure 4 is a plan view of the graticule apparatus;
Figure 5 is a rear view of the graticule apparatus; and
Figure 6 is a partly sectional rear view of the graticule apparatus.

Like reference numerals have been given to like parts throughout the specification.

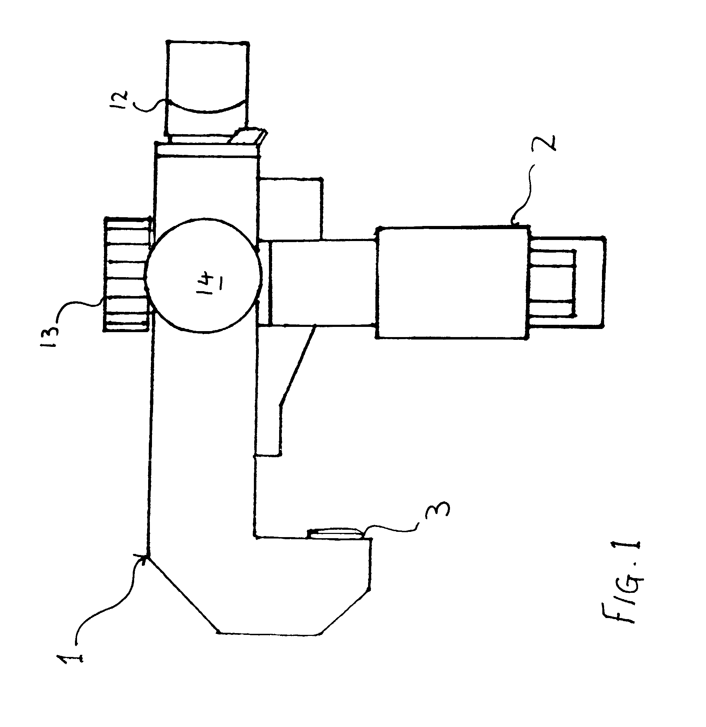

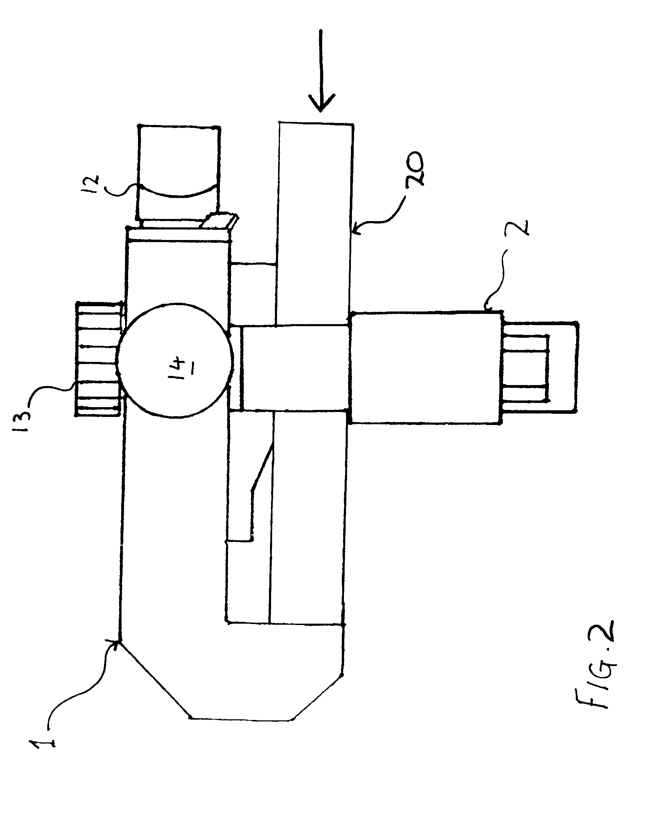

Referring to Figure 1, graticule apparatus indicated generally by the reference numeral 1 is shown. The graticule apparatus 1 is shown here with a clamp 2 so that the graticule apparatus may be attached, to for example, a sight (not shown) for the purpose of aiming a weapon. The graticule apparatus includes an exit lens 3 at one end. when mounted on a sight, lens 3 will be at the end of the sight furthest from the user or observer. This is shown in Figure 2, the sight being indicated by the reference numeral 20. The sight 20 is securely mounted to or may be integral with imaging equipment, such as an image intensifier. The arrow indicates the direction of observation through the sight.

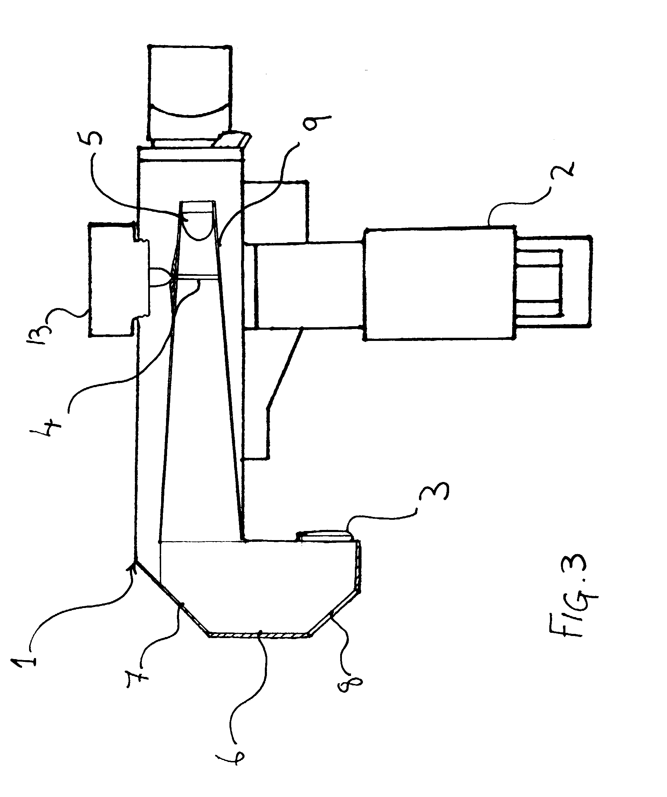

The graticule apparatus is shown in more detail in the sectional view of Figure 3. It comprises a graticule 4, which may be cross-hairs or other symbology, an LED 5 and a prism 6 having reflective surfaces 7 and 8. The LED 5 and graticule 4 are fixed in a mount 9, the position of which is adjustable as described further in this specification.

In use, the LED 5 is arranged to illuminate the graticule 4, the light is reflected by reflective surface 7 onto reflective surface 8 which, in turn, reflects the collimated image so far produced into the exit lens 3 and hence into the sight. Reflective surface 8 is a half-silvered mirror and so not only reflects light incident upon it from within the graticule apparatus but also allows light from the scene to be transmitted through it. Ambient light enters the sight via the prism 6 so that an image is formed of the scene with the graticule superimposed.

The composite image from the exit lens 3 is a real image which is not observable directly by the human eye. Therefore, the composite image can be focussed onto a light sensitive device having an objective lens, such as an image intensifier (not shown), for viewing. Alternatively, the composite image may be focussed into a video camera, or directly onto photographic film. As the graticule apparatus 1 has its own light source, it is particularly useful in low light conditions for providing a reference for an image intensifier.

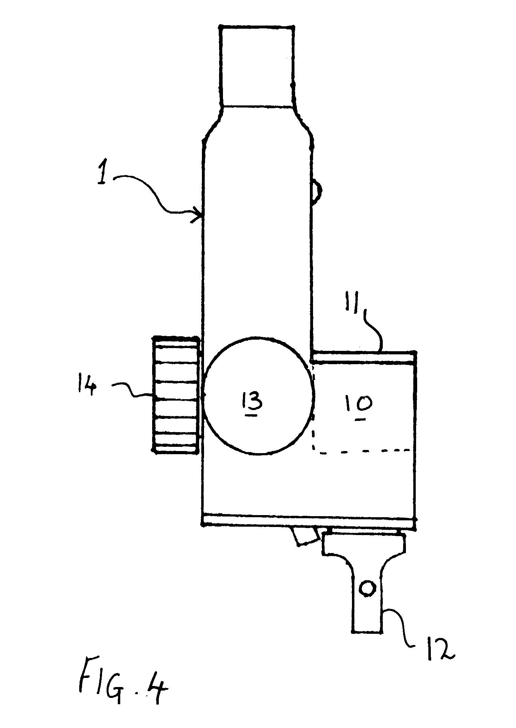

Figure 4 shows the graticule apparatus from above. Batteries are provided in compartment 10, which has a removable cover 11, the batteries being arranged to energise the LED 5. The graticule apparatus 1 also has a brightness control 12 for the LED 5. In certain circumstances, for instance when the graticule apparatus is used in low light with an image intensifier, the LED may be energised at a lower power, thereby extending the life of the battery.

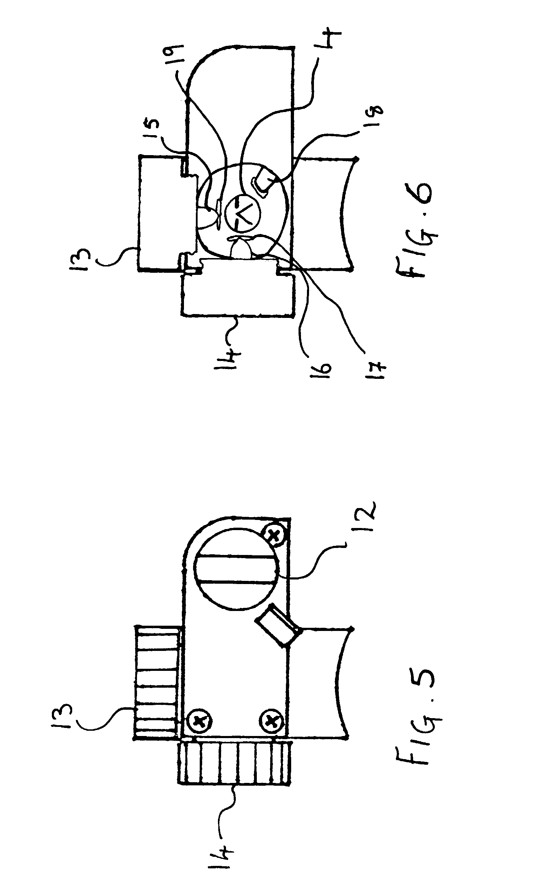

Referring now to Figures 5 and 6, the graticule apparatus also has adjusters 13 and 14 to centre the position of the graticule. To assist in position adjustment of the graticule in daylight, the graticule apparatus is covered, save for a pin hole. To change the elevation of the graticule, adjuster 13, which is threaded, is rotated. A protruding member 15 on the adjuster 13 pushes the mount 9 downwards, the movement of the mount being constrained by protruding member 16 located in groove 17. Resilient means 18, biases the mount against protruding member 15, so that rotation of the adjuster 13 in the opposite direction effects movement of the mount 9 upwards.

Similarly, to change the azimuthal position of the graticule, adjuster 14, which also is threaded, is rotated. Protruding member 16 on the adjuster 14 pushes the mount 9 to the right as shown in this drawing, the movement of the mount being constrained by protruding member 15 located in groove 19. The resilient means 18 further biases the mount 9 against the protruding member 16, so that movement of the graticule to the left as shown in this drawing can be effected by rotating adjuster 14 in the opposite direction.

Preferably, the exit lens 3 has a substantial depth of field so that no separate focussing is required when, for instance, the focussing of the main lens of the sight is adjusted.

A suitable sensitivity setting for the adjusters 13 and 14 is, for a 100m range, one full turn of an adjuster causes a change in observed graticule position of 1.2m.

The LED may conveniently be powered by three, 3.5V lithium batteries or two, 1.5V button-type cells.

The graticule apparatus has been described in relation to providing a graticule image for a sight. However, the optical system could be arranged so that the graticule image is provided to more than one sight so that, for instance, the graticule may be projected into a video camera and an image intensifier simultaneously.

## Claims

1. Graticule apparatus (1) including a graticule (4), characterised by a source of light (5) arranged to illuminate the graticule and an optical system (6, 3) arranged to produce an image of the graticule.

2. Apparatus as claimed in claim 1, wherein the source of light is a light emitting diode (5).

3. Apparatus as claimed in claim 1 or 2, also having graticule positioning means (13, 14) arranged so that the graticule may be displaced in directions parallel to the plane of the graticule.

4. Apparatus as claimed in any one of claims 1 to 3, wherein the optical system includes a prism (6) having a reflective surface (7; 8).

5. Apparatus as claimed in any one of claims 1 to 4, wherein the optical system further comprises a lens (3).

6. Apparatus as claimed in any one of claims 1 to 5, also having attachment means (2) arranged so that the graticule apparatus may be secured to a sight (20).

7. Apparatus as claimed in claim 5, further comprising a light sensitive device positioned in the focal plane of the lens (3).

8. A sight (20) including graticule apparatus (1) as claimed in any preceding claim, the graticule apparatus being arranged to be remote from the observable line of sight.

9. A sight (20) adapted for use with graticule apparatus (1) as claimed in any one of claims 1 to 8.

10. Imaging apparatus including a sight as claimed in claim 9 or 10.
